# EUROPÄISCHE PATENTSCHRIFT

(11) **EP 1 602 053 B1**
(45) Veröffentlichungstag und Bekanntmachung des Hinweises auf die Patenterteilung: **23.04.2008**
(21) Anmeldenummer: 04717639.1
(22) Anmeldetag: 05.03.2004
(51) Int. Cl.: G06Q 30/00, H04Q 7/38

(54) **VERFAHREN ZUM EINLÖSEN EINER GUTSCHRIFT**
METHOD FOR A CREDIT NOTE PAYMENT
PROCEDE DE PAIEMENT D'UNE ECRITURE AU CREDIT

(30) Priorität: 11.03.2003 DE 10310834
(43) Veröffentlichungstag der Anmeldung: 07.12.2005
(73) Patentinhaber: Vodafone Holding GmbH, 40213 Düsseldorf (DE)
(72) Erfinder: LASAAR, Karsten, 45470 Mülheim (DE); HABY, Ulrike, 40227 Düsseldorf (DE)
(74) Vertreter: Weisse, Renate
(86) Internationale Anmeldenummer: PCT/EP2004/002302
(87) Internationale Veröffentlichungsnummer: WO 2004/081832

(56) Entgegenhaltungen:
- EP-A- 1 261 180
- EP-A- 1 262 930
- WO-A-00/62260
- US-B1- 6 505 046

## Beschreibung

### Technisches Gebiet

Die Erfindung betrifft ein Verfahren für eine Gutschrift, insbesondere von Wertpapieren, Wertgutscheinen, Voucher, Coupons oder Tickets *gemäß dem Oberbegriff des Anspruchs 1.*

### Stand der Technik

Gutschriften, insbesondere Wertpapiere, Wertgutscheine, Voucher, Coupons und Tickets, sind schon seit langem bekannt. Dabei handelt es sich in der Regel um ein Stück Papier, welches einen bestimmten Wert innehat. Dieser Wert kann beispielsweise ein Getränk, Geld, einen Eintritt für eine Veranstaltung oder für eine Wurst sein. Eine solche Gutschrift wird an eine Person ausgegeben und von einem zur Annahme dieser Gutschrift Berechtigten wieder eingelöst.

Gutschriften werden oft zu Werbezwecken eingesetzt und können unmittelbar an eine Person ausgegeben werden. Oft werden Gutschriften durch einen Verteiler an Passanten auf der Straße verteilt. Dies ist vielen Leuten unangenehm, da sie ungerne von fremden Personen, die sie nicht kennen, angesprochen werden. Eine andere Möglichkeit des Verteilens von Gutschriften besteht darin, die Gutschriften mit der Post an Zielgruppen zu versenden. Dies ist eine relativ kostspielige Angelegenheit. Häufig werden daher Gutschriften auch bestimmten Zeitungen beigelegt.

Auch Tickets, beispielsweise für Messen, Kultur- und Sportveranstaltungen, werden derzeit an entsprechenden Verkaufsstellen verkauft und direkt durch übergabe an Interessenten ausgegeben. Alternativ dazu wird das Ticket auch gelegentlich mit der Briefpost versandt.

Auch Fahrscheine sind Gutschriften. Der Inhaber eines Fahrscheins ist ermächtigt, ein entsprechendes Verkehrsmittel, für welches der Fahrschein gilt, zu nutzen. Der Fahrschein wird schließlich durch einen Schaffner oder einen Automaten entwertet, d. h. eingelöst.

Ein Nachteil der Gutschriften aus Papier besteht darin, dass durch ihre Verwendung Unmengen an Papiermüll entstehen. Ein weiterer Nachteil besteht darin, dass die Verteilung dieser Gutschriften relativ arbeits- und kostenintensiv ist.

Es sind elektronische Gutschriften bekannt, die beispielsweise über das Internet oder mit der elektronischen Post (E-Mail) verteilt werden. Nachteil dieser elektronischen Gutschriften ist, dass sie in der Regel an ein Computersystem gebunden sind und nicht ohne weiteres mitgenommen werden können. Diese Problematik der Mitnahme von elektronischen Gutschriften zeigt sich besonders bei Tickets für kulturelle Veranstaltungen. Ein Computer lässt sich nur schwer in eine Theaterveranstaltung mitnehmen. Häufig wird daher auch hier ein Ticket mit einem Drucker ausgedruckt.

*Die* EP 1 261 180 A2 *beschreibt allgemein, wie Bilder und Text über ein Mobilfunknetz als SMS, EMS oder MMS versendet werden. Personalisierte und*/*oder kopiergeschützte MMS, welche als Gutschriften an Mobilfunkendgeräte übermittelt werden,sind dort nicht vorgesehen.*

*Die* US 6 505 046 *offenbart die Generierung und das Versenden von gebietsspezifischen Coupons. Die Coupons werden dazu in der Zelle erzeugt, in der sich das Mobilfunkgerät befindet. Der Coupon wird anschließens an das Mobilfunkgerät übermittelt.*

*Die* EP 1 262 930 A1 *offenbart ein Verfahren für eine Gutschrift, insbesondere Vouchers. Das Verfahren umfasst das Übermitteln der Gutschrift über ein Mobilfunknetz an ein mobiles Terminal, wie einem Mobiltelefon oder einem drahtlosen PDA. Die Gutschrift wird schließlich, beispielsweise durch einen Händler, eingelöst. Die Gutschriften werden vorzugsweise mit einem digitalen Zertifikat versehen, um die Authentizität der Gutschziften-Nachricht zu gewährleisten. Ferner kann die Gutschrift verschlüsselt über das Funknetz übermittelt werden.*

*Die WO 00*/*62260 A1 beschreibt ein Verfahren und System zum Bestellen, Laden und Verwenden von Zutritts-Ticket für den Zutritt zu zutrittskontrvilierten Dienstvorrichtungen. Die bestellten Zutritt-Tickets werden über ein Mobilfunknetz an ein mobiles Kommunikationsgerät übermittelt und dort in einem Speichermodul gespeichert. Der Datenaustausch zwischen diesem Speichermodul und einer Leservorrichtung erfolgt über eine kontaktlose Schnittstelle. Ob ein Benutzer zutrittberechtigt ist, wird anhand der Ticket-lriformationen, welche in dem Zutritt-Ticket enthalten sind, entschieden. Dabei handelt es sich beispielsweise um eine digital signierte Ticket-Nummer oder um Angaben über die betreffende Dienstvorrichtung.*

### Offenbarung der Erfindung

Aufgabe der Erfindung ist es, die Nachteile des Standes der Technik zu vermeiden und ein kostengünstiges Verfahren zum Übergeben und/oder Verteilen von Gutschriften, insbesondere Wertpapieren, Wertgutscheinen, Voucher und Tickets, zu schaffen, wobei die Gutschriften sich einfach und sicher von einem zur Annahme Berechtigten einlösen lassen.

Erfindungsgemäß wird die Aufgabe durch ein Verfahren zum Einlösen einer Gutschrift, insbesondere Wertpapiere, Wertgutscheine, Voucher und Tickets der eingangs genannten Art gelöst, bei dem *der Code aus mehreren unterschiedlichen Bildern besteht, die in einem vorgegebenen Takt wechseln, wobei die wechselnden Bilder nur in Kombination eine Berechtigung zur Nutzung der Gutschrift (26) ergeben.*

Mittlerweile sind Mobilfunkendgeräte, wie Handys, gängige Kotnmunikationsrmttel, die in der Bevölkerung über eine große Akzeptanz verfiigen. Die Erfindung beruht nun auf dem Prinzip, dieses Konimunikafionsmittel als Träger von Gutschriften zu verwenden. Dazu werden die Gutschriften über das Mobilfunknetz an die Mobilfunkendgeräte übermittelt. Das Mobilfunkendgerät speichert die Gutschrift in einem Speicher des Mobilfunkendgeräts. Alternativ kann die Gutschrift auch auf der SIM-Karte gespeichert werden. Ein zur Annahme der Gutschrift Berechtigter kann nun diese Gutschriften zum Einlösen entwerten. Er muss dazu lediglich die Gutschriften aus dem Mobilfunkendgerät ein- bzw. ablesen. *Dazu wird die Gutschrift als MMS (= Multimedia Messaging Standard) übermittelt. MMS ermöglicht den Versand von Texten. Melodien und Bildern über das Mobilfunknetz. Dabei ist die Nachrichtenlänge, Gestaltung und Dateigröße einer MMS nicht begrenzt. Auch der Versand von Videosequenzen ist möglich Um die Fälschungs- bzw. die Manipulationssicherheit von Gutschriften zu erhöhen, wird vorgeschlagen, dass die MMS ein Bild enthält. Um die Fälschungs- bzw. die Manipulationssicherheit vor Gutschriften zu erhöhen, enthält die MMS einen Code. Der Code besteht in mehreren unterschiedlichen Bildern, die in einem vorgegebenen Takt wechseln. Hierbei handelt es sich ebenfalls um eine Sicherungsmaßnahme, die verhindern sollen, dass die Gutschrift mehrfach unbefugt verwendet wird. Die Sicherheit wir noch dadurch erhöht, wenn die wechselnden Bilder nur in Kombination eine Berechtigung zur Nutzung der Gutschrift ergeben.*

Ein bevorzugter Aspekt ergibt sich, wenn das Bild der MMS einen Code, insbesondere einen zwei- oder mehrdimensionale Bar-Code, enthält.

In einer bevorzugten Ausbildung des erfindungsgemäßen Verfahrens wird die Gutschrift über eine WAP-Verbindung übermittelt. Da mittlerweile auch das WAP (= Wireless Application Protocol) bei den meisten Mobilfunkendgeräten verwendbar ist, ist diese Art der übermittlung besonders geeignet. WAP ist ein Verfahren, welches das drahtlose Senden von Text und Bildern auf mobile Empfangsgeräte ermöglicht, welche dann beispielsweise mit einem WAP-Browser dargestellt werden können.

Eine vorteilhafte Ausgestaltung der Erfindung ergibt sich insbesondere auch dadurch, dass die Gutschrift als JAVA-Applikation an das Mobilfunkendgerät übermittelt wird.

Eine besonders geeignete Ausbildung des erfindungsgemäßen Verfahrens wird dadurch erzielt, wenn die Gutschrift auf die SIM-Karte durch ein SIM-Application-Toolkit (SAT) übermittelt wird.

Eine weitere vorteilhafte Ausgestaltung des erfindungsgemäßen Verfahrens erhält man, wenn die Gutschrift übermittelt wird, sobald sich das Mobilfunkendgerät in einer bestimmten Funknetzzelle des Mobilfunknetzes aufhält. Durch diese Maßnahme kann der Personenkreis, der eine Gutschrift erhalten soll, lokal begrenzt werden. Es erhalten nämlich nur solche Mobilfunkendgeräte eine Gutschrift, die sich in irgendeiner Art und Weise in einer Funknetzzelle des Mobilfunknetzes aufhalten. So können beispielsweise Personen einen Gutschein über ein Getränk erhalten, die sich in der Nähe eines Lokals aufhalten.

Ob eine Person bzw. dessen Mobilfunkendgerät überhaupt berechtigt ist, eine Gutschrift einzulösen, kann in einer vorteilhaften Ausgestaltung der Erfindung durch eine Berechtigungsüberprüfung für das Beziehen der Gutschrift über eine WAP-Verbindung erfolgen.

Um den Verwaltungsaufwand für das Übermitteln und Verwalten von Gutschriften, insbesondere kostenmäßig zu minimieren, werden die Gutschriften vorteilhafterweise in einem zentralen Übermittlungs- und Verwaltungssystem verwaltet.

Gutschriften können normalerweise von einer Person auf eine andere Person übertragen werden. Damit das überragen auch bei dem vorgeschlagenen erfindungsgemäßen Verfahren funktioniert, lässt sich in einer vorteilhaften Ausgestaltung der Erfindung die Gutschrift unmittelbar von einem Mobilfunkendgerät an ein anderes Mobilfunkendgerät über das Mobilfunknetz, ggf. mit Umschreibung der Rechte, in dem Übermittlungs- und Verwaltungssystem übertragen.

Eine technische Einrichtung zum Einlösen der Gutschrift durch Ab lesen der Gutschrift durch den zur Annahme der Gutschrift Berechtigten ist vorgesehen.

Wenigstens zwei Bilder bzw. codierte Bilder sind vorhanden, um die Gutschrift einzulösen. Auch diese Maßnahme erhöht die Manipulationssicherheit für solche Gutschriften, die unter Umständen auch große Werte enthalten können.

Zur Verhinderung von Missbrauch besteht die Möglichkeit in einer vorteilhaften Ausgestaltung der Erfindung, dass die technische Einrichtung vor und/oder nach dem Ablesen der Gutschrift vom Mobilfunkendgerät Informationen zu der Gutschrift bei dem zentralen Übermittlungs- und Verwaltungssystem abfragt. Hierdurch kann beispielsweise überprüft werden, ob die Gutschrift nicht bereits eingelöst wurde.

Je nach Kommunikationsmittel kann es für das erfindungsgemäße Verfahren auch vorteilhaft sein, wenn das Einlösen der Gutschrift über das Internet kontrollierbar ist.

Damit ein Empfänger einer Gutschrift möglichst zügig seine Gutschrift aufrufen kann, erweist es sich als vorteilhaft, daß eine menügesteuerte Anzeige an dem Mobilfunkendgerät vorgesehen ist, die ein Menü mit einem Menüpunkt aufweist, worüber die Gutschriften über das Mobilfunknetz abrufbar sind.

Eine weitere vorteilhafte Ausgestaltung der Erfindung ergibt sich, wenn die Gutschrift der MSISDN des Mobilfunkendgerätes zugeordnet ist und nach dem Einlösen für diese MSISDN gesperrt wird. Durch diese Maßnahme wird verhindert, dass die Gutschriften mit demselben Mobilfimkendgerät mehrmals eingelöst werden kann.

Eine bevorzugte Ausbildung des erfindungsgemäßen Verfahrens besteht darin, dass das Einlösen der Gutschrift über das Internet oder sonstige Netzwerkvcrbindung, *d.h.* online, kontrollierbar ist. Auf diese Weise kann unmittelbar die Gültigkeit einer Gutschrift über ein Datennetzwerk kontrolliert werden.

Da es jedoch vorkommen kann, dass diese Art der Kontrolle der Gutschriften wegen begrenzter Datenkapazität zu lange dauert, erhält man eine weiter vorteilhafte Ausgestaltung des erfindungsgemäßen Verfahrens dadurch, dass die Gutschrift beim Einlösen ohne Internet oder sonstige Netzwerkverbindung, *d.h.* offline, kontrollierbar ist. Damit kann die Gutschrift unmittelbar vor Ort kontrolliert werden.

Eine zusätzliche bevorzugte Ausgestaltung des erfindungsgemäßen Verfahrens ergibt sich durch die Möglichkeit, dass die Gutschrift storniert werden kann. Im Falle eines Irrtums, z.B. versehentliches versenden einer Gutschrift, kann diese widerrufen werden. Es erscheint vorteilhaft, wenn die Gutschrift in dem Verwaltungssystem, insbesondere über das Internet, storniert werden kann.

In einer weiteren vorteilhaften Ausgestaltung der Erfindung kann die Gutschrift und/oder eine Quittung für die Gutschrift mit einer Druckeinrichtung ausgedruckt werden. Die erforderlichen Daten können beispielsweise aus einem geeigneten Portal im Internet oder WAP abgerufen werden.

Da es vorkommen kann, dass ein Mobilfunkendgerät für das erfindungsgemäße Verfahren nicht geeignet ist, ist es von Vorteil eine Überprüfung des Mobilfunkengeräts vorzunehmen, bevor die Gutschrift übermittelt wird. Es muss dabei Überprüft werden, ob das Mobilfunkendgerät zur Annahme der Gutschrift geeignet ausgebildet ist. Dies ist besonders bei älteren Modellen häufig nicht der Fall.

Weitere Vorteile des erfindungsgemäßen Verfahrens ergeben sich aus dem Gegenstand der Unteransprüche sowie den Zeichnungen und der dazugehörigen Beschreibung.

### Kurze Beschreibung der Zeichnung

- Fig. 1: zeigt in einer Prinzipskizze das erfindungsgemäße Verfahren zur Übermittlung von Gutschriften.
- Fig. 2: zeigt in einer Prinzipskizze die wichtigsten Verfahrensschritte des erfindungsgemäßen Verfahrens.

### Bevorzugtes Ausfährungsbeispiel

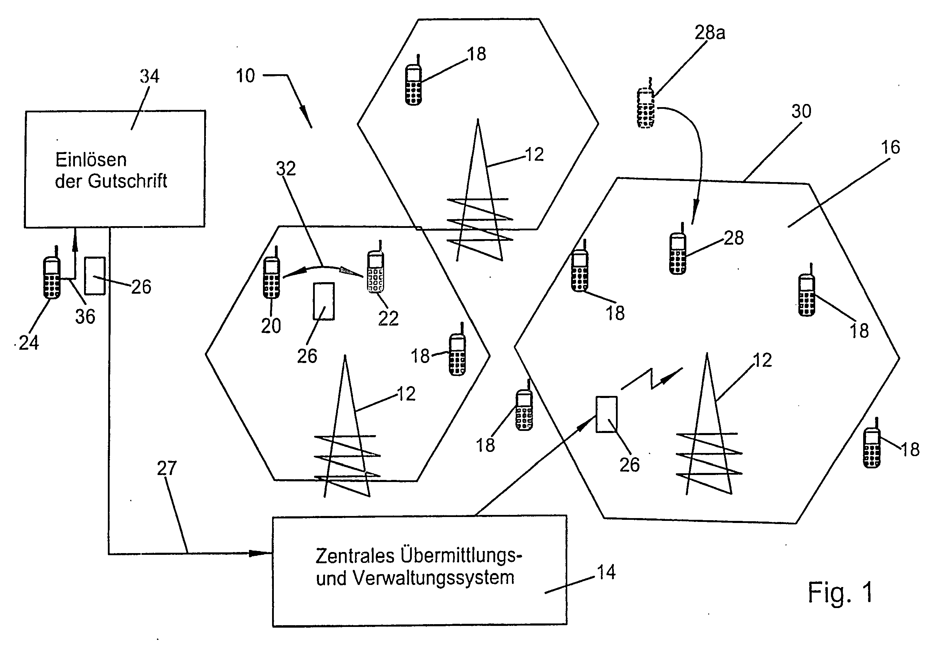

In Fig. 1 wird mit 10 ein Mobilfunknetz bezeichnet. Das Mobilfunknetz 10 enthält Funkmasten 12 und ein computergesteuertes zentrales Übermittlungs- und Verwaltungssystem 14 für die Mobilfunkkommunikation. Die Funkmasten 12 sind so aufgestellt, dass sie eine bestimmte Fläche funktechnisch abdecken, sogenannte Funknetzzellen 16. Mobilfunkendgeräte 18, 20, 22, 24 können über das Mobilfunknetz 10 miteinander kommunizieren.

In dem zentralen Übermittlungs- und Verwaltungssystem 14 können insbesondere Gutschriften 26 erzeugt werden. Über das Mobilfunknetz 10 werden die Gutschriften 26 von dem zentralen Übermittlungs- und Verwaltungssystem 14 an geeignete Mobilfunkendgeräte 18, 20, 22, 24 übermittelt. Unter Gutschriften 26 sind insbesondere Wertpapiere, Wertgutscheine, Voucher, Coupons oder Tickets zu verstehen. Die Gutschriften 26 werden als MMS an die Mobilfunkendgeräte 18, 20, 22, 24 versandt Die Gutschriften 26 sind vorzugsweise kopiergeschützt, um Missbrauch vorzubeugen.

Im vorliegenden Ausführungsbeispiel wird gezeigt, wie ein Mobilfunkendgerät 28 in eine Funknetzzelle 16 eintritt. Der ursprüngliche Ort des Mobilfunkendgeräts 28 wird mit 28a bezeichnet und gestrichelt dargestellt. Pfeil 28b deutet an, wie das Mobilfunkendgerät 28 über die Zellgrenze 30 der Funknetzzelle 16 gelangt. In dem Moment, in dem das Mobilfunkendgerät 28 über die Zellgrenze 30 der Funknetzzelle 16 gelangt, wird dem Mobilfunkendgerät 28 eine Gutschrift 26 von dem zentralen Übermittlungs- und Verwaltungssystem 14 über das Mobilfunknetz 10 übermittelt.

Die Mobilfunkendgeräte 20, 22 tauschen eine Gutschrift 26 mit allen Rechten, die in dem zentralen Übermittlungs- und Verwaltungssystem 14 verwaltet werden, aus. Der Austausch der Gutschrift 26 wird durch Pfeil 32 symbolisiert.

Das Einlösen einer Gutschrift 26 wird symbolisch anhand des Mobilfunkendgeräts 24 dargestellt. Zum Einlösen der Gutschrift 26 ist im vorliegenden Ausführungsbeispiel eine geeignete technische Einrichtung 34 zum Ab lesen der Gutschrift 26 vorgesehen. Die technische Einrichtung 34 darf nur von einem Berechtigten, der zum Einlösen der Gutschrift 26 berechtigt ist, verwendet werden. Der Vorgang des Ab lesens der Gutschrift 26 wird durch Pfeil 36 angedeutet. Anschließend wird die eingelöste Gutschrift 26 in dem zentralen Übermittlungs- und Verwaltungssystem 14 für weitere Verwendungen gesperrt. Dies wird mit Pfeil 27 angedeutet.

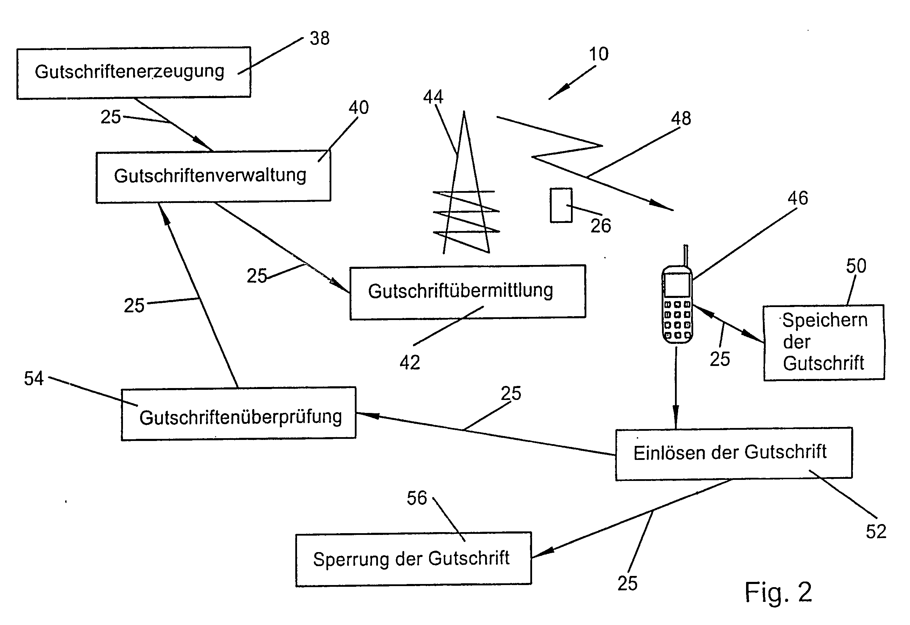

In Fig. 2 werden die prinzipiellen Verfahrensschritte des erfindungsgemäßen Verfahrens als Diagramm dargestellt. Pfeile 25 zeigen immer, welcher Verfahrensschritt als nächster folgt. Zunächst werden Gutschriften 26 erzeugt. Dieser Vorgang wird durch Kasten 38 symbolisiert. Die so erzeugten Gutschriften 26 sind in der Regel kopiergeschützt und fälschung- bzw. martipulationssicher ausgebildet. Fälschungssicherheit wird durch geeignete Bildsequenzen erreicht. Die Gutschriften 26 unterliegen einer Gutschriftenverwaltung 40, wo sie verwaltet und überwacht werden. Die Gutschriftenverwaltung 40 wird im Regelfall in dem computergesteuerten zentralen Übermittlung- und Verwaltungssystem 14 (vgl. Fig. 1) vorgenommen. Von hier aus werden die Gutschriften 26 übermittelt, was durch Kasten 42 symbolisiert wird. Sendemast 44 und Mobilfunkendgerät 46 stellen dabei das Mobilfunknetz 10 dar. Der Kontakt des Mobilfunkendgeräts 46 in dem Mobilfunknetz wird mit dem Zackenpfeil 48 angedeutet.

Die elektronische Gutschrift 26 wird nun in einem Speicher des Mobilfunkendgeräts 46 gespeichert. Die Speicherung in dem Mobilftnakendgerät 46 wird durch Kasten 50 symbolisiert und kann beispielsweise in einem festen Speicher des Mobilfunkendgeirats 46 oder auf einer SIM-Karte, welche in das Mobilfunkendgerät 46 eingesetzt wird, erfolgen.

Der nächste Schritt besteht darin, dass die Gutschrift 26 eingelöst wird. Das Einlösen erfolgt maschinell, beispielsweise mit einer technischen Einrichtung 34 (vgl. Fig. 1). Anschließend wird die Gültigkeit der Gutschrift 26 überprüft, Kasten 54. Dieser Vorgang wird durch das zentrale Übermittlung- und Verwaltungssystem 14 unterstützt, die dazu mit der technischen Einrichtung 34 zum Einlöten der Gutschrift 26 verbunden ist.

Wenn die Gutschrift 26 eingelöst worden ist, wird die Gutschrift 26 zur weiteren Verwendung gesperrt. Dies wird mit Kasten 56 symbolisiert. Das Sperren in der Gutschrift 26 kann beispielsweise dadurch erfolgen, dass die Gutschrift 26 an die MSISDN (= Mobile Subscriber Integrated Services Digital Network) gekoppelt ist. Die Sperrung der Gutschrift 26 erfolgt üblicherweise in dem zentralen Übermittlungs- und Verwaltungssystem 14.

## Patentansprüche

1. Verfahren für eine Gutschrift (26), insbesondere von Wertpapieren. Wertgutscheinen, Voucher, Coupons oder Tickets, *mit folgenden* Verfahrensschritten:
(a) Übermitteln (42) der Gutschrift *(26) ) als kopiergeschützte und*/*oder persniralisierte MMS mit einem Code* über ein Mobilfunknetz (10) an ein Mobilftinkendgerät (46),
(b) Speichern (50) der Gutschrift (26) in einem Speicher des Mobilfunkendgeräts (46) und/oder auf einer SIM-Karte,
(c) *Abrufen der Gutschriften (26) auf eine menügesteuerte Anzeige an dem Mobilfiaikendgerät (18) mit einem Menüpunkt,*
*(d)* Einlösen (52) der Gutschrift (26) durch Ablesen der Gutschrift (26) durch *eine technische Einrichtung (34) zum Ablesen der Gutschrift (26) eines* zur Annahme der Gutschrift (26) Berechtigten,
***dadurch gekennzeichnet, dass***
*(e) der Code aus mehreren unterschiedlichen Bildern besteht, die in einem vorgegebenen Takt wechseln, wobei die wechselnden Bilder nur in Kombination eine Berechtigung zur Nutzung der Gutschrift (26) ergeben.*

2. Verfahren für eine Gutschrift (26), insbesondere von Wertpapieren, Wertgutscheinen, Voucher, Coupons oder Tickets, nach Anspruch 1, **dadurch gekennzeichnet, dass** der Code einen zwei- oder mehrdimensionale Bar-Code enthält.

3. Verfahren für eine Gutschrift (26), insbesondere von Wertpapieren, Wertgutscheinen, Voucher, Coupons oder Tickets, nach einem der Ansprüche 1 bis 2, **dadurch gekennzeichnet, dass** die Gutschrift (26) als JAVA-Applikation an das Mobilfunkendgerät übermittelt wird.

4. Verfahren für eine Gutschrift (26), insbesondere von Wertpapieren, Wertgutscheinen, Voucher, Coupons oder Tickets, nach einem der Ansprüche 1 bis 3, **dadurch gekennzeichnet, dass** die Gutschrift (26) auf die SIM-Karte durch ein SIM-Application-Toolkit (SAT) übermittelt wird.

5. Verfahren für eine Gutschrift (26), insbesondere von Wertpapieren, Wertgutscheinen, Voucher, Coupons oder Tickets, nach einem der Ansprüche 1 bis 4, **dadurch gekennzeichnet, dass** die Gutschrift (26) der MSISDN des Mobilfunkendgerätes (46) zugeordnet ist und nach dem Einlösen für diese MSISDN gesperrt wird.

6. Verfahren für eine Gutschrift (26), insbesondere von Wertpapieren, Wertgutscheinen, Voucher, Coupons oder Tickets, nach einem der Ansprüche 1 bis 5 **dadurch gekennzeichnet, dass** die Gutschrift (26) übermittelt wird, sobald sich das Mobilfunkendgerät (28) in einer bestimmten Funknetzzelle (16) des Mobilfunknetzes (10) aufhält.

7. Verfahren für eine Gutschrift (26), insbesondere von Wertpapieren, Wertgutscheinen, Voucher, Coupons oder Tickets, nach einem der Ansprüche 1 bis 6, **dadurch gekennzeichnet, dass** die Gutschrift in einem Zeitintervall oder zu einem bestimmten Zeitpunkt übermittelt wird.

8. Verfahren für eine Gutschrift (26), insbesondere von Wertpapieren, Wertgutscheinen, Voucher, Coupons oder Tickets, nach einem der Ansprüche 1 bis 7, **dadurch gekennzeichnet, dass** eine Berechtigungsüberprüfung (54) für das Beziehen der Gutschrift (26) über eine WAP-Yerbindung erfolgt.

9. Verfahren für eine Gutschrift (26), insbesondere von Wertpapieren, Wertgutscheinen, Voucher, Coupons oder Tickets, nach einem der Ansprüche 1. bis 8, **dadurch gekennzeichnet, dass** die Gutschrift (26) in einem zentralen Übermittlungs- und Verwaltungssystem (14) verwaltet wird.

10. Verfahren für eine Gutschrift (26), insbesondere von Wertpapieren, Wertgutscheinen, Voucher, Coupons oder Tickets, nach einem der Ansprüche 1 bis 9, **gekennzeichnet durch** die Gutschrift (26) unmittelbar von einem Mobilfunkendgerät (20) an ein anderes Mobilfunkendgerät (22) über das Mobilfunknetz (10), ggf. mit Umschreibung der Rechte, in dem zentrale Übermittlungs- und Verwaltungssystem (14) übertragen werden kann.

11. Verfahren für eine Gutschrift (26), insbesondere von Wertpapieren, Wertgutscheinen, Voucher, Coupons oder Tickets, nach einem der Ansprüche 9 bis 10, **dadurch gekennzeichnet, dass** die technische Einrichtung (34) vor und/oder nach dem Ablesen der Gutschrift (26) vom Mobilfunkendgerät (24) Informationen zu der Gutschrift (26) bei dem zentralen Übermittlungs- und Verwaltungssystem (14) abfragt.

12. Verfahren für eine Gutschrift (26), insbesondere von Wertpapieren, Wertgutscheinen, Voucher, Coupons oder Tickets, nach einem der Ansprüche 1 bis 10, **dadurch gekennzeichnet, dass** das Einlösen der Gutschrift (26) über das Internet oder sonstige Netzwerkverbindung, *d.h.* online, kontrollierbar ist.

13. Verfahren für eine Gutschrift (26), insbesondere von Wertpapieren, Wertgutscheinen, Voucher, Coupons oder Tickets, nach einem der Ansprüche 1 bis 10, **dadurch gekennzeichnet, dass** die Gutschrift (26) beim Einlösen ohne Internet oder sonstige Netzwerkverbindung, *d.h.* offline, kontrollierbar ist.

14. Verfahren für eine Gutschrift (26), insbesondere von Wertpapieren, Wertgutscheinen, Voucher, Coupons oder Tickets, nach einem der Ansprüche 1 bis 12, **dadurch gekennzeichnet, dass** die Gutschrift (26) stornierbar ausgebildet ist.

15. Verfahren für eine Gutschrift (26), insbesondere von Wertpapieren, Wertgutscheinen, Voucher, Coupons oder Tickets, nach einem der Ansprüche 9 bis 13, **dadurch gekennzeichnet, dass** die Gutschrift (26) in dem Verwaltungssystem (14), insbesondere über das Internet, stornierbar vorgesehen ist.

16. Verfahren für eine Gutschrift (26), insbesondere von Wertpapieren, Wertgutscheinen, Voucher, Coupons oder Tickets, nach einem der Ansprüche 1 bis 14, **dadurch gekennzeichnet dass** die Gutschrift (26) und/oder eine Quittung für die Gutschrift (26) mit einer Druckeinrichtung ausgedruckt wird.

17. Verfahren für eine Gutschrift (26), insbesondere von Wertpapieren, Wertgutscheinen, Voucher, Coupons oder Tickets, nach einem der Ansprüche 1 bis 15, **gekennzeichnet durch** Überprüfung des Mobilfunkengeräts (46) vor der Übermittlung (42), ob es zur Annahme der Gutschrift (26) geeignet ausgebildet ist.

## Claims

1. A method for a credit note (26), in particular of bonds, bonuses, vouchers, coupons or tickets, with the following steps of:
(a) transferring (42) the credit note (26) as copy-proof and/or personalised MMS with a code via a mobile network (10) to a mobile terminal (46),
(b) saving (50) the credit note (26) in a memory of the mobile terminal (46) and/or in a SIM card,
(c) retrieving the credit notes (26) by a menu item on a menu-driven display at the mobile terminal (18),
(d) cashing (52) the credit note (26) by reading the credit note (26) with a technical device (34) for reading the credit note (26) of an authorised acceptor of the credit note (26),
**characterised in that**
(e) the code comprises multiple different pictures which changes in a predetermined cycle, whereas only in combination the changing pictures result in an authorisation for using the credit note (26).

2. A method for a credit note (26), in particular of bonds, bonuses, vouchers, coupons or tickets, according to claim 1, **characterised in that** the code contains a two-dimensional or three-dimensional bar code.

3. A method for a credit note (26), in particular of bonds, bonuses, vouchers, coupons or tickets, according to one of the claims 1 to 2, **characterised in that** the credit note (26) is transmitted to the mobile terminal as JAVA application.

4. A method for a credit note (26), in particular of bonds, bonuses, vouchers, coupons or tickets, according to one of the claims 1 to 3, **characterised in that** the credit note (26) is transmitted to the SIM card by a SIM application toolkit (SAT).

5. A method for a credit note (26), in particular of bonds, bonuses, vouchers, coupons or tickets, according to one of the claims 1 to 4, **characterised in that** the credit note (26) is assigned to the MSISDN of the mobile terminal (46) and is disabled for that MSISDN after the cashing.

6. A method for a credit note (26), in particular of bonds, bonuses, vouchers, coupons or tickets, according to one of the claims 1 to 5, **characterised in that** the credit note (26) is transmitted as soon as the mobile terminal (28) is in a certain radio cell (16) of the mobile network (10).

7. A method for a credit note (26), in particular of bonds, bonuses, vouchers, coupons or tickets, according to one of the claims 1 to 6, **characterised in that** the credit note is transmitted in a time interval or a certain point in time.

8. A method for a credit note (26), in particular of bonds, bonuses, vouchers, coupons or tickets, according to one of the claims 1 to 7, **characterised in that** a verification of authorisation (54) is carried out for receiving the credit note (26) via a WAP connection.

9. A method for a credit note (26), in particular of bonds, bonuses, vouchers, coupons or tickets, according to one of the claims 1 to 8, **characterised in that** the credit note (26) is administrated in a central transmission and administration system (14).

10. A method for a credit note (26), in particular of bonds, bonuses, vouchers, coupons or tickets, according to one of the claims 1 to 9, **characterised in that** the credit note (26) can be transmitted directly from one mobile terminal (20) to another mobile terminal (22) via the mobile network (10), if necessary with transcription of rights, in the central transmission and administration system (14).

11. A method for a credit note (26), in particular of bonds, bonuses, vouchers, coupons or tickets, according to one of the claims 9 to 10, **characterised in that** the technical device (34) requests for information about the credit note (26) at the central transmission and administration system (14) before and/or after the reading of the credit note (26) from the mobile terminal (24).

12. A method for a credit note (26), in particular of bonds, bonuses, vouchers, coupons or tickets, according to one of the claims 1 to 10, **characterised in that** the cashing of the credit note (26) is controllable via the internet or other network connections, i.e. online controllable.

13. A method for a credit note (26), in particular of bonds, bonuses, vouchers, coupons or tickets, according to one of the claims 1 to 10, **characterised in that** the cashing of the credit note (26) is controllable without the internet or other network connections, i.e. offline controllable.

14. A method for a credit note (26), in particular of bonds, bonuses, vouchers, coupons or tickets, according to one of the claims 1 to 12, **characterised in that** the credit note (26) is formed cancellable.

15. A method for a credit note (26), in particular of bonds, bonuses, vouchers, coupons or tickets, according to one of the claims 9 to 13, **characterised in that** the credit note (26) is provided cancellable, in particular via the internet, in the administration system (14).

16. A method for a credit note (26), in particular of bonds, bonuses, vouchers, coupons or tickets, according to one of the claims 1 to 14, **characterised in that** the credit note (26) and/or a receipt of the credit note (26) is printed by a printing device.

17. A method for a credit note (26), in particular of bonds, bonuses, vouchers, coupons or tickets, according to one of the claims 1 to 15, **characterised by** checking the mobile terminal (46) before the transmission (42), if it is able to receive the credit note (26).

## Revendications

1. Procédé destiné à un avoir (26), notamment de titres, bons d'achat, bons d'échange, coupons ou tickets, présentant les étapes de procédé suivantes :
(a) transmission (42) de l'avoir (26) sous forme de MMS protégé contre la copie et/ou personnalisé à l'aide d'un code à un terminal de radiotéléphonie mobile (45) par l'intermédiaire d'un réseau de radiotéléphonie mobile (10),
(b) mémorisation (50) de l'avoir (26) dans une mémoire du terminal de radiotéléphonie mobile (46) et/ou sur une carte SIM,
(c) appel des avoirs (26) sur un affichage commandé par menu situé dans le terminal de radiotéléphonie mobile (18) à l'aide d'un sous-menu,
(d) encaissement (52) de l'avoir (26) par lecture de l'avoir (26) par une installation technique (34) de lecture de l'avoir (26) d'une personne autorisée à accepter l'avoir (26),
**caractérisé en ce que**
(e) le code se compose de plusieurs images différentes changeant à un rythme donné, les images changeantes ne donnant une autorisation d'utilisation de l'avoir (26) que lorsqu'elles sont combinées.

2. Procédé destiné à un avoir (26), notamment de titres, bons d'achat, bons d'échange, coupons ou tickets selon la revendication 1, **caractérisé en ce que** le code comprend un code-barres bidimensionnel ou pluridimensionnel.

3. Procédé destiné à un avoir (26), notamment de titres, bons d'achat, bons d'échange, coupons ou tickets selon l'une quelconque des revendications 1 à 2, **caractérisé en ce que** l'avoir (26) est transmis au terminal de radiotéléphonie mobile sous forme d'application JAVA.

4. Procédé destiné à un avoir (26), notamment de titres, bons d'achat, bons d'échange, coupons ou tickets selon l'une quelconque des revendications 1 à 3, **caractérisé en ce que** l'avoir (26) est transmis à la carte SIM par un SIM Application Toolkit (SAT).

5. Procédé destiné à un avoir (26), notamment de titres, bons d'achat, bons d'échange, coupons ou tickets selon l'une quelconque des revendications 1 à 4, **caractérisé en ce que** l'avoir (26) est associé au MSISDN du terminal de radiotéléphonie mobile (46) et ne peut plus être utilisé pour ce MSISDN après l'encaissement.

6. Procédé destiné à un avoir (26), notamment de titres, bons d'achat, bons d'échange, coupons ou tickets selon l'une quelconque des revendications 1 à 5, **caractérisé en ce que** l'avoir (26) est transmis dès que le terminal de radiotéléphonie mobile (28) se trouve dans une cellule (16) précise du réseau de radiotéléphonie mobile (10).

7. Procédé destiné à un avoir (26), notamment de titres, bons d'achat, bons d'échange, coupons ou tickets selon l'une quelconque des revendications 1 à 6, **caractérisé en ce que** la transmission de l'avoir s'effectue par intervalle ou à un certain moment.

8. Procédé destiné à un avoir (26), notamment de titres, bons d'achat, bons d'échange, coupons ou tickets selon l'une quelconque des revendications 1 à 7, **caractérisé en ce qu'**un contrôle d'autorisation (54) est effectué pour obtenir l'avoir (26) à partir de la connexion WAP

9. Procédé destiné à un avoir (26), notamment de titres, bons d'achat, bons d'échange, coupons ou tickets selon l'une quelconque des revendications 1 à 8, **caractérisé en ce que** l'avoir (26) est géré dans un système central de transmission et de gestion (14).

10. Procédé destiné à un avoir (26), notamment de titres, bons d'achat, bons d'échange, coupons ou tickets selon l'une quelconque des revendications 1 à 9, **caractérisé en ce que** l'avoir (26) peut être transmis directement d'un terminal de radiotéléphonie mobile (20) à un autre terminal de radiotéléphonie mobile (22) par l'intermédiaire du réseau de radiotéléphonie mobile (10) et le cas échéant par transfert des droits dans le système central de transmission et de gestion (14).

11. Procédé destiné à un avoir (26), notamment de titres, bons d'achat, bons d'échange, coupons ou tickets selon l'une quelconque des revendications 1 à 10, **caractérisé en ce qu'**avant et/ou après la lecture de l'avoir (26) par le terminal de radiotéléphonie mobile (24), l'installation technique (34) interroge le système central de transmission et de gestion (14) pour avoir des informations concernant l'avoir (26).

12. Procédé destiné à un avoir (26), notamment de titres, bons d'achat, bons d'échange, coupons ou tickets selon l'une quelconque des revendications 1 à 10, **caractérisé en ce que** l'encaissement de l'avoir (26) peut être contrôlé par le biais d'Internet ou d'autres connexions réseau, c'est à dire en ligne.

13. Procédé destiné à un avoir (26), notamment de titres, bons d'achat, bons d'échange, coupons ou tickets selon l'une quelconque des revendications 1 à 10, **caractérisé en ce que** l'encaissement de l'avoir (26) peut être contrôlé sans Internet ni autres connexions réseau, c'est-à-dire hors ligne.

14. Procédé destiné à un avoir (26), notamment de titres, bons d'achat, bons d'échange, coupons ou tickets selon l'une quelconque des revendications 1 à 12, **caractérisé en ce que** l'avoir (26) se présente de façon à pouvoir être annulé.

15. Procédé destiné à un avoir (26), notamment de titres, bons d'achat, bons d'échange, coupons ou tickets selon l'une quelconque des revendications 9 à 13, **caractérisé en ce que** l'avoir (26) est prévu de façon à pouvoir être annulé dans le système de gestion (14), notamment par le biais d'Internet.

16. Procédé destiné à un avoir (26), notamment de titres, bons d'achat, bons d'échange, coupons ou tickets selon l'une quelconque des revendications 1 à 10, **caractérisé en ce que** l'avoir (26) et/ou un récépissé de l'avoir (26) est imprimé à l'aide d'un dispositif d'impression.

17. Procédé destiné à un avoir (26), notamment de titres, bons d'achat, bons d'échange, coupons ou tickets selon l'une quelconque des revendications 1 à 15, **caractérisé par** le contrôle du terminal de radiotéléphonie mobile (46) avant la transmission (42) confirmant si celui-ci est apte à assurer l'acceptation de l'avoir (26).
